Europäisches Patentamt

European Patent Office

Office européen des brevets

(11) Veröffentlichungsnummer : **0 069 211**
**B1**

# (12) EUROPÄISCHE PATENTSCHRIFT

(45) Veröffentlichungstag der Patentschrift :
09.10.85

(51) Int. Cl.⁴ : **B 29 C 51/12**

(21) Anmeldenummer : 82103716.5

(22) Anmeldetag : 30.04.82

(54) Tiefziehmaschine zum Herstellen von Behältern aus thermoplastischer Folie.

(30) Priorität : 08.07.81 DE 3126904

(43) Veröffentlichungstag der Anmeldung :
12.01.83 Patentblatt 83/02

(45) Bekanntmachung des Hinweises auf die Patenterteilung : 09.10.85 Patentblatt 85/41

(84) Benannte Vertragsstaaten :
FR GB IT

(56) Entgegenhaltungen :
DE-A- 2 363 020
DE-A- 2 703 946
DE-B- 2 365 028
DE-B- 2 604 789
DE-U- 1 969 306
FR-A- 2 034 915

(73) Patentinhaber : SOCIETE D'APPLICATION PLASTI-
QUE, MECANIQUE ET ELECTRONIQUE PLASTIME-
CANIQUE S.A.
rue de l'Epée Royale
F-14700 Falaise (FR)

(72) Erfinder : Dronet, Jean Marc
Rue Saint Jean
F-14700 Falaise (FR)

(74) Vertreter : Pfeiffer, Helmut
Jagenberg AG Patentwesen Kennedydamm 15-17
Postfach 1123
D-4000 Düsseldorf 30 (DE)

## Beschreibung

Die Erfindung betrifft eine Tiefziehmaschine zum Herstellen von Behältern aus thermoplastischer Folie mit Einrichtungen für in die Hohlformen vor dem Tiefziehen einzulegende banderolenförmige Streifenabschnitte nach dem Oberbegriff des Patentanspruchs 1.

Eine derartige Tiefziehmaschine ermöglicht eine rationelle und hygienische Verpackung von in flüssiger oder pastöser Form vorliegenden Substanzen, wie beispielsweise Medikamenten oder Nahrungsmitteln. Zu diesem Zweck verfügt die Tiefziehmaschine über Mittel zur Herstellung der Behälter, zu deren Füllung und zu deren Versiegelung. Weiter sind Mittel vorhanden, um die Behälter, beispielsweise zu Dekorationszwecken, mit einem banderolenförmigen Streifen zu versehen, der auf der Außenwandung des Behälters angeordnet und dort mit ihm durch Versiegelung dauerhaft verbunden wird.

Eine Tiefziehmaschine der eingangs genannten Art ist aus der DE-B-23 65 028 bekannt. Bei dieser bekannten Tiefziehmaschine umfaßt die Einrichtung zum Einlegen der banderolenförmigen Streifenabschnitte in die axial verschiebbare Hohlform einen axial unverschiebbaren, jedoch drehbaren Wickeldorn für die banderolenförmigen Streifenabschnitte, der in seiner einen Stellung vollständig in die Hohlform hineinragt, während in seiner anderen Stellung sein Kopfende den Boden der Hohlform während des Formvorgangs bildet.

Insbesondere bei einem derartigen drehbaren Wickeldorn mit kreisförmiger Grundfläche und einer von der Zylindergestalt abweichenden Behälterform — dieser kann beispielsweise in Randnähe eine elliptische Querschnittsfläche aufweisen — treten beim Einlegen der Banderolen Probleme auf. Diese äußern sich beispielsweise darin, daß das überlappende Endstück der Banderole beim Tiefziehen des Behälters in Richtung auf den Boden der Form verschoben wird und somit nicht mehr auf gleicher Höhe wie das Anfangsstück der Banderole liegt. Ein derartig banderolierter Behälter wird jedoch als Ausschuß bewertet.

Der Erfindung liegt die Aufgabe zugrunde die bekannte Tiefziehmaschine dahingehend zu verbessern, daß die vorstehend erläuterten Probleme vermieden werden und eine einwandfreie Banderolierung erzielt wird.

Diese Aufgabe wird durch die im kennzeichnenden Teil des Patentanspruchs 1 angegebenen Merkmale gelöst.

Vorteilhafte Weiterbildungen der Erfindung gehen aus den Unteransprüchen hervor.

Die Erfindung wird nachfolgend unter Bezug auf die Zeichnung näher erläutert. Dabei zeigt:

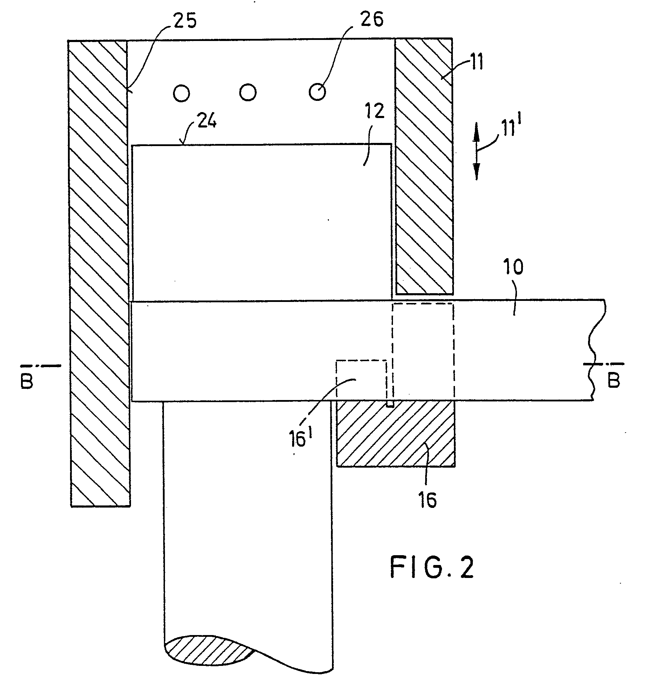

Figur 1 einen schematischen Querschnitt im Bereich der Hohlformen der Tiefziehmaschine unter Weglassung aller nicht unmittelbar zur Erfindung gehörigen Maschinenteile entsprechend Linie B-B von Fig. 2;

Figur 2 einen Längsschnitt entlang A-A gem. Fig. 1;

Figur 3 eine Aufsicht auf die Oberseite des gleitbar gelagerten Schiebers;

Figur 4 eine Schnittansicht des gleitbar gelagerten Schiebers gemäß C-C von Fig. 3;

Figur 5 eine Teildarstellung des gleitbar gelagerten Schiebers mit Blickrichtung auf die Einführungsseite der banderolenförmigen Streifenabschnitte;

Figur 6 ein erstes Ausführungsbeispiel einer Schneideinrichtung zum Abschneiden der banderolenförmigen Streifenabschnitte;

Figur 7 ein weiteres Ausführungsbeispiel einer Schneideinrichtung zum Abschneiden der banderolenförmigen Streifenabschnitte;

Figur 8 eine Schnittdarstellung einer Mehrzahl nebeneinander angeordneter Hohlformen in der Schnittebene B-B gemäß Fig. 2.

Das Prinzip der Herstellung von mit banderolenförmigen Streifen versehenen Behältern auf einer Tiefziehmaschine ist bekannt. Es besteht darin, daß man den banderolenförmigen Streifen, der Dekorations- oder auch Verstärkungszwecken dienen kann, in eine Hohlform einlegt, eine thermoplastische vorher erwärmte Folie über die offene Seite der Hohlform bringt, mit Hilfe eines die thermoplastische Folie während seines Eindringens in die Hohlform deformierenden Stempels einen Behälter vorformt und zum Abschluß der Formgebung des Behälters ein Druckmedium benutzt, das auf der Stempelseite auf den vorgeformten Behälter wirkt und dessen Wände gegen die Innenwand der Hohlform preßt. Dabei wird die Folie des Behälters fest mit den zuvor in die Hohlform eingelegten banderolenförmigen Streifen verbunden.

Um das Einlegen des banderolenförmigen Streifens in die Hohlform zu ermöglichen, ist bei der bekannten Tiefziehmaschine gemäß DE-B-2 365 028 ein drehbarer Wickeldorn vorgesehen, der den banderolenförmigen Streifen in eine dem Behälter angepaßte Form bringt und den Streifen dann in die Hohlform überführt.

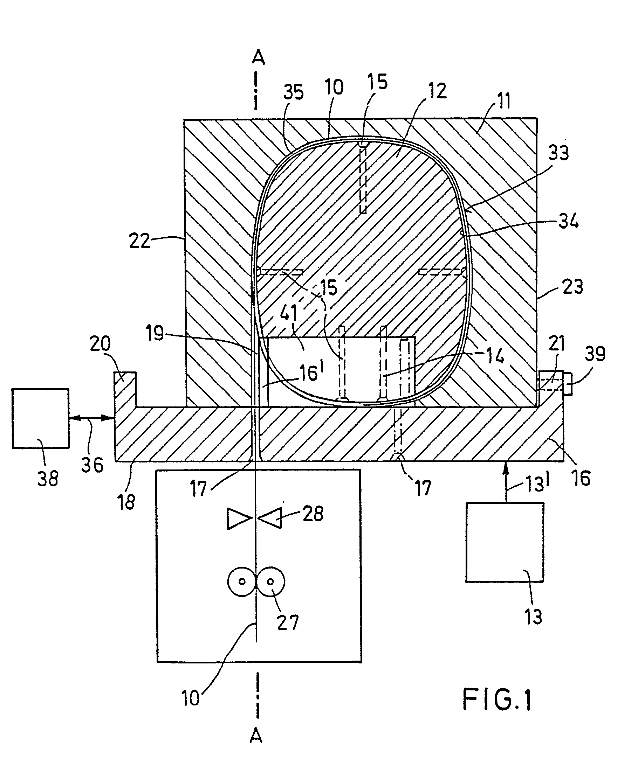

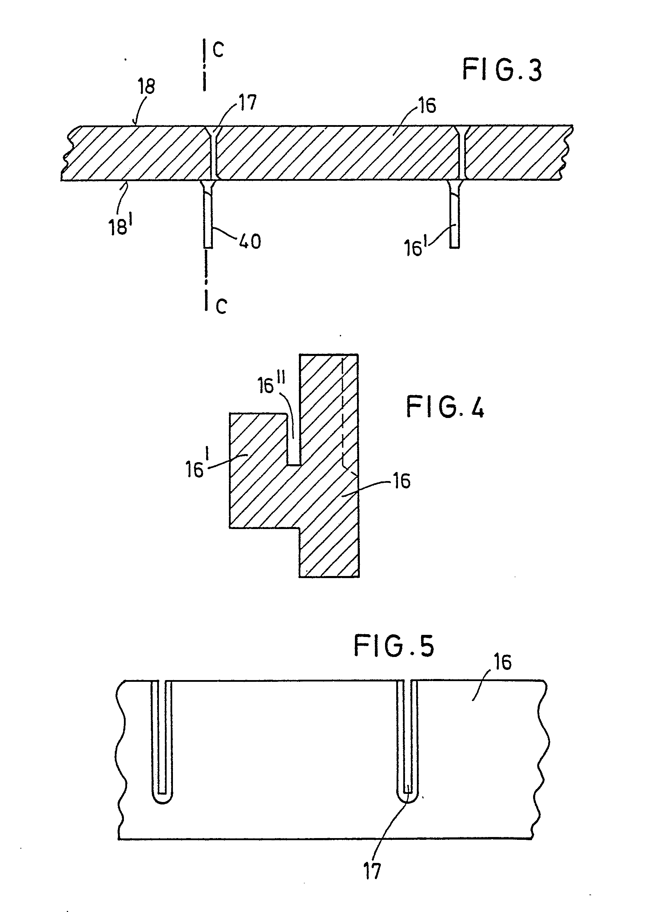

Abweichend davon ist beim Anmeldungsgegenstand ein nicht drehbar angeordneter Wickeldorn 12 vorgesehen (Fig. 1), der in bezug auf die axial bewegliche Hohlform 11 fest angeordnet ist. Außerhalb der Hohlform 11 ist auf der Einführungsseite der banderolenförmigen Streifenabschnitte 10 ein in bezug auf die Hohlform 11 und den Wickeldorn 12 gleitbar gelagerter Schieber 16 (Fig. 3 bis Fig. 5) angeordnet. Der Schieber 16 weist Ausnehmungen 17 auf, deren Höhe der Breite des banderolenförmigen Streifens 10 entspricht. Um die Einführung des banderolenförmigen Streifens 10 in die Ausnehmung 17 zu erleichtern, ist die Ausnehmung 17 auf der der Hohlform 11 abgewandten Außenfläche 18 des Schiebers 16 zweckmäßig trichterförmig erweitert.

Die Gleitbewegung des Schiebers 16 erfolgt senkrecht zur Ebene des banderolenförmigen Streifens 10 und in einer Ebene, die parallel zur Ebene der in der Zeichnung nicht dargestellten Folienbahn verläuft, aus der die Behälter hergestellt werden.

Der gleitbar gelagerte Schieber 16 ist wechselweise zwischen im wesentlichen zwei Arbeitsstellungen verfahrbar, wobei in der ersten Arbeitsstellung des Schiebers 16 die Ausnehmung 17 dem Einführungskanal 19 für die banderolenförmigen Streifenabschnitte 10 in der Hohlform 11 fluchtend gegenüber liegt und wobei in der zweiten Arbeitsstellung des Schiebers 16 die Ausnehmung 17 in Höhe von Bohrungen 15 in der Außenmantelfläche des Wickeldorns 12 liegt. Zwecks Begrenzung der jeweiligen Arbeitsposition des Schiebers 16 weist dieser zwei in Richtung auf die Hohlform 12 hervorragende Anschläge 20, 21 auf, die jeweils zur Anlage an die Außenflächen 22, 23 der Hohlform 11 bestimmt sind und auf diese Weise die Fortbewegung des Schiebers 16 in seine jeweilige Arbeitsposition begrenzen. Mindestens eine Stellschraube 39, die im Anschlag 21 einstellbar und feststellbar gelagert ist, ermöglicht die exakte Justierung der Arbeitspositionen des gleitbar gelagerten Schiebers 16.

Das Einlegen des banderolenförmigen Streifens 10 in die Hohlform 11 verläuft folgendermaßen : Der Schieber 16 befindet sich in seiner ersten Arbeitsposition, in der die Ausnehmung 17 dem Einführungskanal 19 fluchtend gegenüber liegt. Diese Arbeitsposition des Schiebers 16 wird durch den Anschlag 21 begrenzt, der an der Außenfläche 23 der Hohlform 11 anliegt. Die in bezug auf den feststehenden Wickeldorn 12 in Axialrichtung bewegbare Hohlform 11 umgibt in einer ersten Arbeitsstellung den Wickeldorn 12 koaxial derart, daß sich zwischen der Innenwandung 33, der Hohlform 11 und der Außenwandung 34 des Wickeldorns 12 ein Leitkanal 35 für den banderolenförmigen Streifen 10 ergibt.

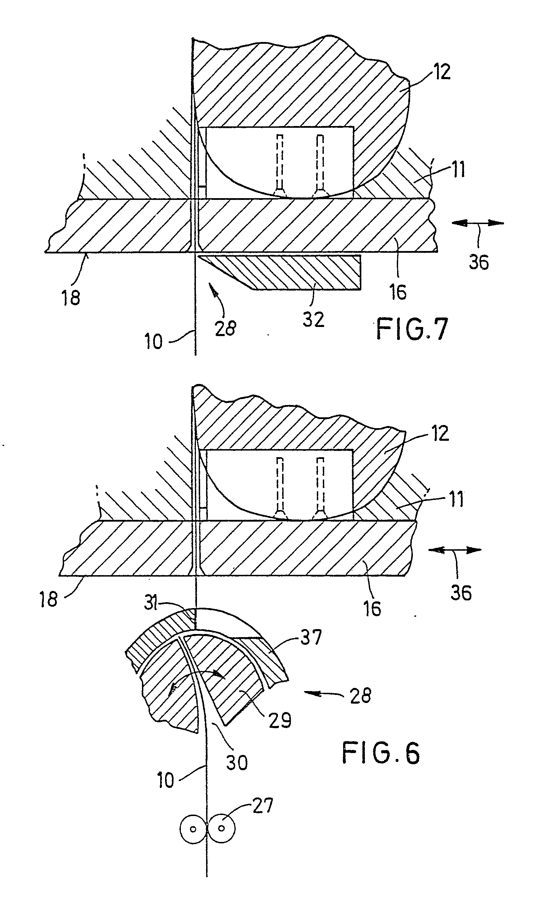

Der banderolenförmige Streifen 10 wird von einer nicht dargestellten Vorratsrolle abgewickelt und durch geeignete Mittel, beispielsweise beidseitig des banderolenförmigen Streifens 10 angeordnete Antriebsrollen 27, vorzugsweise taktmäßig durch die Ausnehmung 17 und den Einführungskanal 19 hindurch derart in den Leitkanal 35 eingeführt, daß er an der Außenmantelfläche 34 des Wickeldorns 12 anliegt. Um die Einführung des banderolenförmigen Streifens 10 zu erleichtern, weist der gleitbar gelagerte Schieber 16 einen nasenförmig ausgebildeten Fortsatz 16' auf, der auf der dem Wickeldorn 12 zugewandten Außenfläche 18 des Schiebers 16 senkrecht hervorspringend angeordnet ist. Dieser Fortsatz 16' ist deutlich in Fig. 3 und Fig. 4 erkennbar. Der in die Ausnehmung 17 eingeführte banderolenförmige Streifen 10 gleitet geführt an der Außenfläche 40 des Fortsatzes 16' entlang. Der Wickeldorn 12 verfügt über einen Ausschnitt 41 in Höhe und Tiefe des Fortsatzes 16, um die Bewegung des Schiebers 16 zwischen seinen verschiedenen Arbeitspositionen nicht zu behindern. Das vordere Endstück des Streifens 10 gelangt dabei in den Bereich von in der Außenmantelfläche 34 des Wickeldornes 12 angeordneten Bohrungen 14, die über eine Leitung 13' mit einer Unterdruckquelle 13 verbindbar ist und wird demzufolge bei Beaufschlagung der Bohrung 14 mit Unterdruck an der Außenfläche 34 des Wickeldorns 12 festgehalten.

Vermittels einer Schneideinrichtung 28 wird der banderolenförmige Streifen 10 sodann auf eine vorbestimmte Länge abgeschnitten, die in der Regel maximal dem Außenumfang des zu banderolierenden Behälters entspricht.

Abweichend von bekannten Lösungen ist keine Überlappung des Streifens 10 notwendig, so daß sich in vorteilhafter Weise Verlagerungen des überlappenden Endstücks beim Tiefziehvorgang nicht einstellen.

In vorteilhafter Weise ermöglicht die Erfindung auch die Verarbeitung kürzerer Streifenabschnitte, deren Länge geringer als der Umfang des Behälters ist, wenn beispielsweise nur Teile des Außenumfangs eines Behälters mit einem banderolenförmigen Streifen 10 versehen werden sollen.

Der gleitbar gelagerte Schieber 16 wird sodann in seine zweite Arbeitsposition fortbewegt, die durch den an der Außenfläche 22 zur Anlage kommenden Anschlag 20 begrenzt ist. Die Fortbewegungsrichtung des Schiebers 16 ist dabei durch den Pfeil 36 gekennzeichnet. Während der Fortbewegung des Schiebers 16 wird das noch in der Ausnehmung 17 des Schiebers 16 befindliche hintere Endstück des banderolenförmigen Streifens 10 durch den Schieber 16 in Richtung auf die Außenmantelfläche 34 des Wickeldorns 12 bewegt und kommt dort im Bereich von Bohrungen 15 zur Anlage. Diese Bohrungen 15 sind ebenso wie die Öffnung 14 über die Leitung 13' an eine Unterdruckquelle 13 anschließbar. Bei Beaufschlagung der Bohrungen 15 mit Unterdruck wird auch das hintere Endstück des vom Schieber 16 heranbewegten banderolenförmigen Streifens 10 am Wickeldorn 12 festgehalten. Um dabei das im Bereich der Bohrungen 14 am Wickeldorn 12 anliegende vordere Endstück des Streifens 10 nicht zu behindern, weist der Fortsatz 16' eine Ausnehmung 16" auf (Fig. 4).

In einem ersten Arbeitstakt bewegt sich die in Axialrichtung bewegbare Hohlform 11 soweit in bezug auf den feststehenden Wickeldorn 12, daß sich die in der Innenwandfläche 25 der Hohlform 11 angeordneten Öffnungen 26 in Höhe des auf dem Wickeldorn 12 aufgewickelten banderolenförmigen Streifens 10 befinden. Auch die Öffnungen 26 sind zu vorbestimmbaren Zeitpunkten mit der Unterdruckquelle 13 verbindbar. Zunächst wird die Verbindung der Bohrungen 14, 15 mit der Unterdruckquelle 13 unterbrochen mit der Folge, daß sich der Streifen 10 von der Außenmantelfläche 34 des Wickeldorns 12 löst und sich, auch verursacht durch die ihm innewohnende elastische Spannung, an die Innenwandfläche 25 der Hohlform 11 im Bereich der Bohrungen 26 anlegt. Nunmehr werden die Öffnungen 26 mit Unterdruck beaufschlagt, wodurch der Streifen 10 fest an der Innenwandung der Hohlform 11 haftet. In einem weiteren Arbeitstakt bewegt sich sodann die Hohlform 11 mitsamt dem anhaftenden Streifen 10 soweit in bezug auf den feststehenden Wickeldorn 12 aufwärts, daß dessen obere Grundfläche 24 den Boden der Hohlform 11 bildet. In an sich bekannter Weise wird dann, wie eingangs bereits beschrieben, mittels eines Tiefziehprozesses unter Zuhilfenahme der Hohlform 11 aus thermoplastischer Folie ein Behälter hergestellt. Dabei wird der banderolenförmige Streifen 10, der auf der Außenwandung des Behälters aufliegt und diesen ringförmig umgibt, dauerhaft mit der Wandung des Behälters versiegelt.

Inzwischen ist der gleitbar gelagerte Schieber 16 in seine erste Arbeitsposition zurückgekehrt, so daß mit Einführung eines neuen Banderolenabschnitts in die Einführungsöffnung der Ausnehmung 17 eine neue Folge der zuvor beschriebenen Arbeitstakte beginnen kann.

Zur Fortbewegung des gleitbar gelagerten Schiebers 16 in seine Arbeitsposition entlang der Richtung des Pfeils 36 ist ein Antrieb 38 vorgesehen. Hierbei handelt es sich vorzugsweise um einen Linearantrieb, der einen in seiner Bewegungsrichtung umkehrbaren und durch ein Druckmedium, wie beispielsweise Druckluft beaufschlagbaren Kolben umfaßt.

Unter Bezug auf Fig. 6 und Fig. 7 werden vorteilhafte Ausführungsbeispiele der Schneidvorrichtung 28 zum Ablängen des banderolenförmigen Streifens 10 auf eine vorbestimmte Länge erläutert. Das Ausführungsbeispiel gemäß Fig. 6 umfaßt einen ersten feststehenden, eine Schneidkante 31 aufweisenden Teil 37, in dem ein zweiter Teil 29 um eine in der Ebene des Streifens 10 liegende Achse drehbar angeordnet ist, der einen zentral angeordneten Führungsschlitz 30 zur Hindurchleitung des Streifens 10 umfaßt. Bei einer Drehbewegung des drehbar gelagerten Teils 29 wird der banderolenförmige Streifen 10 an der Schneidkante 31 abgetrennt.

Ein besonders zweckmäßiges Ausführungsbeispiel einer Schneidvorrichtung 28 ist in Fig. 7 schematisch dargestellt. Sie umfaßt ein Messer 32, das parallel zur Außenfläche 18 des Schiebers verlaufend fest angeordnet ist und das bei Fortbewegung des Schiebers 16 in seine zweite Arbeitsposition den banderolenförmigen Streifen 10 im Bereich der trichterförmigen Mündung der Ausnehmung 17 durchtrennt. Dieses Ausführungsbeispiel zeichnet sich durch eine geringe Anzahl bewegbarer Teile aus und ist daher besonders betriebssicher.

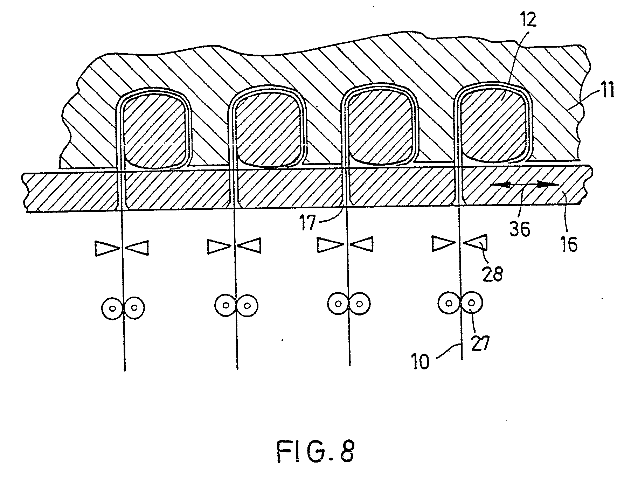

Es ist ohne besondere Schwierigkeiten möglich, wie anhand von Fig. 8 schematisch erläutert wird, unter Anwendung der Erfindung banderolenförmige Streifen 10 in einer Mehrzahl von Hohlformen 11 einzulegen, die beispielsweise in einer Reihe liegend nebeneinander angeordnet sind. Zu diesem Zweck weist der Schieber 16 eine der Zahl der Hohlformen 11 und der einzuführenden banderolenförmigen Streifen 10 entsprechende Anzahl von Ausnehmungen 17 und Fortsätzen 16' auf.

**Patentansprüche**

1. Tiefziehmaschine zum Herstellen von mit banderolenförmigen Streifenabschnitten (10) versehenen Behältern aus thermoplastischer Folie mit je einer Einrichtung zum Einlegen der Streifenabschnitte (10) in eine zugeordnete, in Axialrichtung bewegbare Hohlform (11) vor dem Tiefziehen, welche einen Wickeldorn (12) umfaßt, in dessen Außenmantelfläche mit einer Unterdruckquelle (13) verbindbare Bohrungen (14, 15) angeordnet sind, wobei die Maschine einen Träger für eine Folienrolle, Mittel zum Transport der Folie, eine Heizvorrichtung sowie eine zur Herstellung der Behälter aus Folienabschnitten dienende Formvorrichtung umfaßt und die Formvorrichtung aus einer feststehenden Gegenform und der senkrecht zur Folienebene bewegbaren Hohlform (11) besteht, die nach dem Erwärmen der Folie diese jeweils gegen die Gegenform preßt, wonach der Behälter mittels eines Druckmediums geformt und dabei gleichzeitig der in die Hohlform (11) eingebrachte Streifenabschnitt (10) an den Behälter angesiegelt wird, dadurch gekennzeichnet, daß die Einrichtung zum Einlegen der banderolenförmigen Streifenabschnitte (10) in die Hohlform (11) einen in bezug auf die Hohlform (11) feststehenden, undrehbaren Wickeldorn (12) aufweist, und daß außerhalb der Hohlform (11) auf der Einführungsseite der banderolenförmigen Streifenabschnitte (10) ein in bezug auf die Hohlform (11) und den Wickeldorn (12) gleitbar gelagerter, zwischen zwei Arbeitspositionen hin- und herbewegbarer Schieber (16) angeordnet ist, der eine Ausnehmung (17) aufweist, deren Höhe der Breite des banderolenförmigen Streifenabschnitts (10) entspricht.

2. Tiefziehmaschine nach Anspruch 1, dadurch gekennzeichnet, daß die Ausnehmung (17) zwecks Erleichterung der Einführung der banderolenförmigen Streifenabschnitte (10) in die Ausnehmung (17) auf der der Hohlform (11) abgewandten Außenfäche (18) des Schiebers (16) trichterförmig erweitert ist.

3. Tiefziehmaschine nach einem der Ansprüche 1 oder 2, dadurch gekennzeichnet, daß der gleitbar gelagerte Schieber (16) nasenförmig ausgebildete Fortsätze (16') aufweist, die auf der dem Wickeldorn (12) zugewandten Seite senkrecht hervorspringend angeordnet sind.

4. Tiefziehmaschine nach Anspruch 3, dadurch gekennzeichnet, daß die Fortsätze (16') unmittelbar neben den Ausnehmungen (17) angeordnet sind, derart, daß die benachbarte Seitenfläche (40) der Fortsätze (16') bei Einführung der banderolenförmigen Streifenabschnitte (10) als Führung für diese dient.

5. Tiefziehmaschine nach einem der Ansprüche 3 oder 4, dadurch gekennzeichnet, daß der Wickeldorn (12) einen Ausschnitt (41) aufweist, dessen Abmessungen in Höhe und Tiefe dem Fortsatz (16') entsprechen.

6. Tiefziehmaschine nach Anspruch 5, dadurch gekennzeichnet, daß der Fortsatz (16′) eine Ausnehmung (16″) aufweist, um bei Überführung des Schiebers (16′) in seine zweite Arbeitsposition das im Bereich der Öffnungen (14) am Wickeldorn (12) anliegende vordere Endstück des banderolenförmigen Streifens (10) nicht zu behindern.

7. Tiefziehmaschine nach einem der Ansprüche 1 bis 6, dadurch gekennzeichnet, daß in der ersten Arbeitsstellung des Schiebers (16) die Ausnehmung (17) einen Einführungskanal (19) in der Hohlform (11) für die banderolenförmigen Streifenabschnitte (10) fluchtend gegenüberliegt und daß in der zweiten Arbeitsstellung des Schiebers (16) die Ausnehmung (17) etwa in Höhe von Bohrungen (15) in der Außenmantelfläche des Wickeldorns (12) liegt.

8. Tiefziehmaschine nach einem der Ansprüche 1 bis 7, dadurch gekennzeichnet, daß der Schieber (16) zwei in Richtung auf die Hohlform (11) hervorragende Anschläge (20, 21) aufweist, die zur Anlage an die Außenflächen (22, 23) der Hohlform (11) bestimmt sind und die die wechselweise Fortbewegung des Schiebers (16) in jeweils eine seiner zwei möglichen Arbeitspositionen begrenzen.

9. Tiefziehmaschine nach einem der Ansprüche 1 bis 8, dadurch gekennzeichnet, daß zur exakten Einstellung der jeweiligen Arbeitsposition des Schiebers (16) mindestens eine Stellschraube (39) vorgesehen ist, die im Anschlag (21) des Schiebers (16) drehbar und feststellbar gelagert ist.

10. Tiefziehmaschine nach einem der Ansprüche 1 bis 9, dadurch gekennzeichnet, daß die in bezug auf den feststehenden Wickeldorn (12) axial verschiebbare Hohlform (11) zwischen mindestens zwei Arbeitspositionen verschiebbar angeordnet ist, wobei in der ersten Arbeitsposition die Grundfläche (24) des Wickeldorns (12)· den Boden der Hohlform (11) bildet und wobei in der zweiten Arbeitsposition der Hohlform (11) im oberen Teil der Hohlform (11) in deren Innenwandfläche (25) angeordnete, mit einer Unterdruckquelle (13) verbindbare Öffnungen (26) sich in Höhe des auf dem Wickeldorn (12) aufgerollten banderolenförmigen Streifens (10) befinden.

11. Tiefziehmaschine nach einem der Ansprüche 1 bis 10, dadurch gekennzeichnet, daß Mittel, beispielsweise beidseitig des banderolenförmigen Streifens (10) angeordnete Antriebsrollen (27) vorgesehen sind, die ein vorzugsweise taktweises Einführen des banderolenförmigen Streifens (10) in die Hohlform (11) ermöglichen.

12. Tiefziehmaschine nach einem der Ansprüche 1 bis 11, dadurch gekennzeichnet, daß eine Schneidvorrichtung (28) zum Abschneiden der banderolenförmigen Streifen (10) auf eine vorbestimmte Länge vorgesehen ist.

13. Tiefziehmaschine nach Anspruch 12, dadurch gekennzeichnet, daß die Schneidvorrichtung (28) einen drehbar angeordneten Teil (29) mit einem zentral angeordneten Führungsschlitz (30) zur Hindurchleitung der banderolenförmigen Streifen (10) sowie eine fest angeordnete Schneidkante (31) aufweist.

14. Tiefziehmaschine nach Anspruch 12, dadurch gekennzeichnet, daß zum Abschneiden der banderolenförmigen Streifen (10) auf eine vorbestimmte Länge eine Schneideinrichtung vorgesehen ist, welche ein Messer (32) umfaßt, das parallel zur Außenfläche (18) des Schiebers (16) verlaufend fest angeordnet ist und das bei Fortbewegung des Schiebers (16) in seine zweite Arbeitsposition den banderolenförmigen Streifen (1) im Bereich der trichterförmigen Mündung der Ausnehmung (17) durchtrennt.

15. Tiefziehmaschine nach einem der Ansprüche 1 bis 14, dadurch gekennzeichnet, daß zur Hin- und Herbewegung des gleitbar gelagerten Schiebers (16) ein Antrieb (38) vorgesehen ist.

16. Tiefziehmaschine nach Anspruch 15, dadurch gekennzeichnet, daß der Antrieb (38) vorzugsweise ein Linearantrieb ist, der einen in seiner Bewegungsrichtung umkehrbaren und durch ein Druckmedium, wie beispielsweise Druckluft, beaufschlagbaren Kolben umfaßt.

## Claims

1. Thermoforming machine for the production of containers provided with banderole-shaped strip sections (10) from thermoplastic sheeting with in each case an apparatus for inserting the strip sections (10) into an assigned female mould (11), movable in the axial direction, before thermoforming, which apparatus comprises a winding mandrel (12) in the circumferential surface of which bores (14, 15), connectable to a source of suction (13) are arranged, the machine comprising a carrier for a roll of sheeting, means for transporting the sheeting, a heating device and a moulding device serving to produce the containers from sheeting sections, and the moulding device consisting of a stationary male mould and the female mould (11) which is movable perpendicular to the sheeting plane and which presses the sheeting, after it has been heated, each time against the male mould, after which the container is shaped by means of a pressure medium and at the same time the strip section (10) introduced into the female mould (11) is sealed onto the container, characterised in that the apparatus for inserting the banderole-shaped strip sections (10) into the female mould (11) has a winding mandrel (12) which is stationary in relation to the female mould (11) and unrotatable, and in that arranged outside the female mould (11) on the feed side of the banderole-shaped strip sections (10) is a slider (16) which is slideably mounted with respect to the female mould (11) and the winding mandrel (12), is movable back and forth between two work positions and has a recess (17) the height of which corresponds to the width of the banderole-shaped strip section (10).

2. Thermoforming machine according to Claim 1, characterised in that the recess (17) is enlarged in the shape of a funnel on the outer surface (18) of the slider (16) facing away from the female mould (11) in order to facilitate feeding of the banderole-shaped strip sections (10) into the recess (17).

3. Thermoforming machine according to one of claims 1 or 2, characterised in that the slideably mounted slider (16) has nose-shape designed extensions (16') which are arranged projecting upright on the side facing towards the winding mandrel (12).

4. Thermoforming machine according to Claim 3, characterised in that the extensions (16') are arranged directly alongside the recesses (17) in such a way that the neighbouring side area (40) of the extensions (16') serves as a guide for the banderole-shaped strip sections (10) when they are fed in.

5. Thermoforming machine according to one of Claims 3 or 4, characterised in that the winding mandrel (12) has a cut-out (41), the dimensions of which correspond to the extension (16') in height and depth.

6. Thermoforming machine according to Claim 5, characterised in that the extension (16') has a recess (16") so as not to obstruct the front end piece of the banderole-shaped strip (10) lying in the region of the openings (14) on the winding mandrel (12) when transferring the slider (16) into its second work position.

7. Thermoforming machine according to one of Claims 1 to 6, characterised in that, in the first work position of the slider (16), the recess (17) lies opposite and in line with a feed channel (19) in the female mould (11) for the banderole-shaped strip sections (10), and in that, in the second work position of the slider (16), the recess (17) lies approximately on a level with bores (15) in the circumferential surface of the winding mandrel (12).

8. Thermoforming machine according to one of Claims 1 to 7, characterised in that the slider (16) has two stops (20, 21) protruding in the direction of the female mould (11) and which are intended to contact with the outer surfaces (22, 23) of the female mould (11) and which limit the alternating travel of the slider (16) respectively in either one of its two possible work positions.

9. Thermoforming machine according to one of Claims 1 to 8, characterised in that, for exact setting of the respective work position of the slider (16), at least one set screw (39) is provided, which is rotatably and securably mounted in the stop (21) of the slider (16).

10. Thermoforming machine according to one of Claims 1 to 9, characterised in that the female mould (11), axially movable in relation to the stationary winding mandrel (12), is movably arranged between at least two work positions, in the first work position, the base area (24) of the winding mandrel (12) forming the bottom of the female mould (11) and, in the second work position of the female mould (11), openings (26) arranged in the top part of the female mould (11), in its inside wall area (25), and connectable to a source of suction (13), being located on a level with the banderole-shaped strip (10) rolled onto the winding mandrel (12).

11. Thermoforming machine according to one of Claims 1 to 10, characterised in that means, for example drive rollers (27) arranged on either side of the banderole-shaped strip (10), are provided, which make possible a, preferably rhythmic, feeding of the banderole-shaped strip (10) into the female mould (11).

12. Thermoforming machine according to one of Claims 1 to 11, characterised in that a cutting device (28) for cutting off the banderole-shaped strips (10) to a predetermined length is provided.

13. Thermoforming machine according to Claim 12, characterised in that the cutting device (28) has a rotatable part (29) with a central guide slit (30) for passing through the banderole-shaped strips (10) and a fixed cutting edge (31).

14. Thermoforming machine according to Claim 12, characterised in that, for cutting off the banderole-shaped strips (10) to a predetermined length, a cutting apparatus is provided which comprises a knife (32) which is fixed to extend parallel to the outside surface (18) of the slider (16) and which separates the banderole-shaped strip (1) in the region of the funnel-shaped mouth of the recess (17) upon advance movement of the slider (16).

15. Thermoforming machine according to one of Claims 1 to 14, characterised in that a drive (38) is provided for the to and fro movement of the slideably mounted slider (16).

16. Thermoforming machine according to Claim 15, characterised in that the drive (38) is preferably a linear drive which comprises a piston which is reversible in its direction of movement and can be impinged by a pressure medium, such as for example compressed air.

**Revendications**

1. Machine à emboutir destinée à fabriquer des récipients en matière thermoplastique en feuille pourvus de sections de bande en forme de banderole (10) comportant chaque fois un dispositif pour introduire les segments de bande (10) dans un moule associé (11) axialement mobile avant l'emboutissage, qui comprend un mandrin d'envidage (12) dans la surface périphérique externe duquel sont prévues des forures (14, 15) pouvant être raccordées à une source de dépression (13), la machine comprenant un support pour un rouleau de matière en feuille, des moyens pour transporter la matière en feuille, un dispositif de chauffage ainsi qu'un dispositif de moulage servant à fabriquer les récipients au départ de sections de feuille, le dispositif de moulage étant formé d'un contre-moule fixe et du moule (11) mobile perpendiculairement au plan de la feuille, qui, après chauffage de la feuille, la presse contre le contre-moule, après quoi le formage du récipient est effectué au moyen d'un agent sous pression et la section de bande (10) introduite dans le moule (11) est simultanément scellée sur le récipient, caractérisée en ce que le dispositif destiné à mettre en place la section de bande en forme de banderole (10) comporte, dans le moule (11), un mandrin d'envidage (12) non tournant fixe par rapport au moule (11) et, à l'extérieur du moule (11), du côté d'introduction du segment de bande (10) en forme de banderole, est prévu un coulisseau (16) monté à coulissement par rapport au moule (11) et au mandrin d'envidage (12) et mobile dans un sens et dans l'autre entre deux positions de travail, ce coulisseau présentant une fente (17) dont la hauteur correspond à la largeur du segment de bande en forme de banderole.

2. Machine à emboutir suivant la revendication 1, caractérisée en ce que la fente (17) s'évase, en vue de faciliter l'introduction du segment de bande en forme de banderole (10) dans la fente (17), sur la surface externe (18) du coulisseau (16) tournée vers le moule (11).

3. Machine à emboutir suivant la revendication 1 ou 2, caractérisée en ce que le coulisseau mobile (16) présente des saillies (16') en forme de bec qui sont disposées de manière à faire saillie verticalement sur le côté tourné vers le mandrin d'envidage (12).

4. Machine à emboutir suivant la revendication 3, caractérisée en ce que les saillies (16') sont disposées immédiatement à côté des fentes (17) d'une manière telle que la surface latérale (40) voisine des saillies (16') serve de guide pour ces saillies lors de l'introduction des segments de bande en forme de banderole (10).

5. Machine à emboutir suivant la revendication 3 ou 4, caractérisée en ce que le mandrin d'envidage (12) présente une découpe (41) dont les dimensions correspondent en hauteur et en profondeur à la saillie (16').

6. Machine à emboutir suivant la revendication 5, caractérisée en ce que la saillie (16') présente un évidement (16") afin, lors du transfert du coulisseau (16) dans sa seconde position de travail, de ne pas gêner la partie d'extrémité antérieure de la bande en forme de banderole (10) appliquée sur le mandrin d'envidage (12) dans la zone des forures (14).

7. Machine à emboutir suivant les revendications 1 à 6, caractérisée en ce que, dans la première position de travail du coulisseau (16), la fente (17) est disposée en face d'un canal d'introduction (19) dans le moule (11) des segments de bande en forme de banderole (10) et, dans la seconde position de travail du coulisseau (16), la fente (17) est disposée à peu près à hauteur des forures (15) de la surface périphérique externe du mandrin d'envidage (12).

8. Machine à emboutir suivant l'une quelconque des revendications 1 à 7, caractérisée en ce que le coulisseau (16) comporte deux butées (20 et 21) qui font saillie en direction du moule (11), qui sont destinées à venir s'appliquer contre les surfaces externes (22, 23) du moule (11) et qui limitent le déplacement du coulisseau (16) dans un sens ou dans l'autre dans chacune de ses deux positions de travail possibles.

9. Machine à emboutir suivant l'une quelconque des revendications 1 à 8, caractérisée en ce que, pour régler exactement la position de travail correspondante du coulisseau (16), au moins une vis de réglage (39) est prévue et est montée de manière à pouvoir être tournée et bloquée dans la butée (21) du coulisseau (16).

10. Machine à emboutir suivant l'une quelconque des revendications 1 à 9, caractérisée en ce que le moule (11) mobile dans le sens axial par rapport au mandrin fixe (12) est monté coulissant entre au moins deux positions de travail, étant entendu que, dans la première position de travail, la surface de base (24) du mandrin d'envidage (12) forme le fond du moule (11) et que, dans la seconde position de travail du moule (11), des ouvertures (26) prévues dans la partie supérieure du moule (11) dans la surface interne de sa paroi (25), pouvant être raccordées à une source de dépression (13), se trouvent au niveau de la bande en forme de banderole (10) envidée sur le mandrin d'envidage (12).

11. Machine à emboutir suivant l'une quelconque des revendications 1 à 10, caractérisée en ce que des moyens, par exemple des galets d'entraînement (27) disposés des deux côtés de la bande en forme de banderole (10), sont prévus et rendent possible une introduction, de préférence synchronisée de la bande en forme de banderole (10), dans le moule (11).

12. Machine à emboutir suivant l'une quelconque des revendications 1 à 11, caractérisée en ce qu'un dispositif sectionneur (28) est prévu pour couper la bande en forme de banderole (10) à une longueur prédéterminée.

13. Machine à emboutir suivant la revendication 12, caractérisée en ce que le dispositif sectionneur (28) comporte un organe monté à rotation (29) et présentant une fente de guidage centrale (30) destinée à guider la bande en forme de banderole (10) ainsi qu'une arête de coupe (31) fixe.

14. Machine à emboutir suivant la revendication 12, caractérisée en ce que, pour couper la bande en forme de banderole (10) à une longueur prédéterminée, un dispositif sectionneur est prévu et comprend un couteau (32) qui est monté fixe parallèlement à la surface externe (18) du coulisseau (16) et qui, lorsque le coulisseau (16) se déplace vers sa seconde position de travail, sectionne la bande en forme de banderole (1) dans la zone de l'évasement de la fente (17).

15. Machine à emboutir suivant l'une quelconque des revendications 1 à 14, caractérisée en ce qu'un mécanisme d'entraînement (38) est prévu pour déplacer le coulisseau mobile (16) dans un sens et dans l'autre.

16. Machine à emboutir suivant la revendication 15, caractérisée en ce que le mécanisme d'entraînement (38) est de préférence un mécanisme d'entraînement linéaire qui comprend un piston dont le sens du déplacement peut être inversé et qui peut être sollicité par un agent sous pression, comme par exemple de l'air comprimé.

0 069 211

FIG.1

FIG. 2

FIG.3

FIG.4

FIG.5

FIG.7

FIG.6

FIG. 8